# EUROPÄISCHE PATENTSCHRIFT

(11) **EP 2 505 341 B1**
(45) Veröffentlichungstag und Bekanntmachung des Hinweises auf die Patenterteilung: **08.05.2013**
(21) Anmeldenummer: 11160145.6
(22) Anmeldetag: 29.03.2011
(51) Int. Cl.: B29C 67/00

(54) **Verfahren zum schichtweisen Aufbau eines Formkörpers aus hochviskosem photopolymerisierbarem Material**
Method for layered construction of a moulded part from highly viscous photopolymerisable material
Procédé de fabrication par couches d'un objet en matériau photopolymérisable hautement visqueux

(43) Veröffentlichungstag der Anmeldung: 03.10.2012
(73) Patentinhaber: Ivoclar Vivadent AG, 9494 Schaan (LI); Technische Universität Wien, 1040 Wien (AT)
(72) Erfinder: Ebert, Jörg, 9470 Buchs (CH); Homa, Johannes, 6800 Feldkirch (AT); Laubersheimer, Jürgen, 9470 Buchs (CH); Patzer, Johannes, 1110 Wien (AT); Stampfl, Jürgen, 1050 Wien (AT); Wachter, Wolfgang, 9494 Schaan (LI)
(74) Vertreter: UEXKÜLL & STOLBERG

(56) Entgegenhaltungen:
- EP-A1- 0 484 086
- EP-A1- 0 597 114
- WO-A1-2010/045950

## Beschreibung

Die vorliegende Erfindung betrifft ein Verfahren zum schichtweisen Aufbau eines Formkörpers aus hochviskosem photopolymerisierbarem Material, bei dem eine Bauplattform, an deren Unterseite die erste Schicht des aufzubauenden Formkörpers ausgehärtet wird, in eine Wanne in das photopolymerisierbare Material auf eine so bestimmte Höhe abgesenkt wird, dass zwischen der Unterseite der Bauplattform oder, wenn bereits vorhanden, der untersten ausgehärteten Schicht des daran gebildeten Formkörperteils und dem Wannenboden eine Schicht aus photopolymerisierbarem Material mit vorgegebener Schichtdicke definiert wird, die Schicht durch selektive Belichtung von unten durch einen durchsichtigen Wannenboden in der gewünschten Form belichtet und ausgehärtet wird, die Bauplattform wieder angehoben, photopolymerisierbares Material in den belichteten Bereich unter der angehobenen Bauplattform nachgeführt wird und die vorhergehenden Schritte wiederholt werden, bis die letzte Schicht des Formkörpers gebildet ist.

CAD-CAM-Techniken haben in der Dentalbranche schon seit einiger Zeit Einzug gehalten und lösen die traditionelle handwerkliche Herstellung von Zahnersatz ab. Die heute üblichen abtragenden Herstellungsverfahren zur Erzeugung von keramischen Dentalrestaurationskörpern haben aber einige Nachteile, die nach heutigem Stand der Technik mit vernünftigem Aufwand unter wirtschaftlichen Randbedingungen nicht verbessert werden können. In diesem Zusammenhang können aufbauende Herstellungsverfahren, die unter der Bezeichnung "Rapid Prototyping" (schnelle Prototypenbauweise) in Betracht gezogen werden, insbesondere stereolithographische Verfahren, bei denen jeweils eine neu aufgetragene Materialschicht durch ortsselektive Belichtung in der gewünschten Form polymerisiert wird, wodurch sukzessive durch schichtweise Formgebung der gewünschte Körper in seiner dreidimensionalen Form, die sich aus der Aufeinanderfolge der aufgebrachten Schichten ergibt, hergestellt wird.

Für Dentalrestaurationen sind als zu verarbeitende Materialien gefüllte photopolymerisierbare Materialien von Bedeutung, insbesondere keramikgefüllte Materialien. In Bezug auf die Verarbeitung keramikgefüllter Photopolymere ist zum Beispiel auf den Stand der Technik nach WO 98/06560 A1 hinzuweisen. Bei dem dort beschriebenen Verfahren wird ein keramischer Schlicker über eine dynamische Maske (Lichtmodulator) belichtet und dadurch ausgehärtet, wodurch Schicht auf Schicht sukzessive ein dreidimensionale Formkörper aufgebaut werden soll. Bei dem beschriebenen Verfahren wird der keramische Schlicker auf einer Bauplattform von oben belichtet. Bei einer solchen Belichtung von oben muss nach jeder Belichtung mithilfe einer Rakel eine neue dünne Materialschicht aufgetragen werden (typischerweise mit einer Schichtdicke, die zwischen 10 und 100 µm liegt). Für hochviskose photopolymerisierbare Materialien, wie dies keramikgefüllte Harze sind, können so dünne Schichten jedoch nur schwer in reproduzierbarer Weise aufgebracht werden.

Ein Verfahren der eingangs genannten Art, gemäß dem Oberbegriff des Patentanspruchs 1, ist in WO 2010/045950 A1 beschrieben. Das Verfahren dient zum schichtweisen Aufbau eines Formkörpers unter Anwendung einer lithographiebasierten generativen Fertigung, zum Beispiel Rapid Prototyping. Dabei wird eine definierte Schicht aus photopolymerisierbarem Material, das sich in einer Wanne mit einem wenigstens in Teilbereichen lichtdurchlässig ausgebildeten, horizontalen Boden befindet, auf folgende Weise gebildet. Eine vertikal gesteuert bewegliche Bauplattform wird von einem Hubmechanismus getragen und ist an der Wanne so angeordnet, dass sie unter Steuerung einer Steuereinheit durch den Hubmechanismus vertikal angehoben und abgesenkt werden kann. Durch Absenken der Bauplattform in das photopolymerisierbare Material in der Wanne wird Material aus dem Zwischenraum zwischen der Unterseite der Bauplattform und dem Wannenboden verdrängt. Durch genaues Einstellen der vertikalen Position der Bauplattform kann so eine Schicht aus photopolymerisierbarem Material zwischen der Unterseite der Bauplattform und dem Wannenboden mit genau definierter Schichtdicke erzeugt werden. Die so definierte Schicht aus photopolymerisierbarem Material wird dann durch ortsselektive Belichtung von unten durch den lichtdurchlässigen Wannenboden in der gewünschten Geometrie belichtet, um die Schicht dadurch an der Bauplattform auszuhärten. Anschließend wird die Bauplattform mit der daran ausgehärteten ersten Schicht angehoben und photopolymerisierbares Material in den belichteten Bereich nachgeführt, da das Material nicht ohne weiteres aus den umgebenden Bereichen der Wanne in den belichten Bereich nachfließt. Daraufhin wird die Bauplattform wieder abgesenkt, um erneut durch Einstellung der Vertikalposition der Bauplattform eine Schicht aus photopolymerisierbarem Material zwischen der Unterseite der ausgehärteten Schicht und dem Wannenboden mit vorgegebener Schichtdicke zu definieren. Diese Schritte werden wiederholt, um so schichtweise den Formkörpern aus aufeinanderfolgenden Schichten mit jeweils vorgegebener Geometrie aufzubauen.

Nach der Aushärtung einer Schicht wird die Bauplattform mit dem daran bereits gebildeten Teil des Formkörpers angehoben. In dem bei Bildung letzten Schicht belichteten Bereich bleibt danach ein Freiraum oder "Loch" über den Wannenboden zurück, da das dort zuvor in der definierten Schicht aus photopolymerisierbarem Material befindliche Material durch die letzte Belichtung ausgehärtet und mit der Bauplattform vertikal angehoben worden ist. Bei hochviskosen gefüllten photopolymerisierbarem Material, insbesondere oxydkeramikgefüllten und glaskeramikgefüllten Polymeren, stellt sich das Problem, dass das entstandene "Loch" im belichteten Bereich erneut durch photopolymerisierbares Material aufgefüllt werden muss, da das hochviskose Material aufgrund seiner hohen Viskosität nicht ohne weiteres aus den umgebenden Bereichen nachfließt, wie dies bei ungefüllten photopolymerisierbaren Materialien der Fall wäre. Zu diesem Zweck ist in WO 2010/045950 vorgesehen, dass eine Rakel relativ zu der Wanne mit einem vorgegebenen Abstand des unteren Randes der Rakel zum Wannenboden bewegt wird, um so photopolymerisierbares Material aus Bereichen außerhalb des zuletzt belichteten Bereiches in der Wanne in den nach dem Anheben der letzten ausgehärteten Schicht zurückgebliebenen Freiraum zu schieben. Hier fungiert die Rakel als Schiebeelement, um photopolymerisierbares Material in den zurückgebliebenen Freiraum zu transportieren, sie dient aber nicht dazu, um die Schichtdicke zu definieren, denn die Schichtdicke der nächsten auszubildenden Schicht wird durch Absenken der Bauplattform mit dem daran anhaftenden Formkörperteil in das photopolymerisierbares Material auf einen vorgegebenen Abstand zum Wannenboden eingestellt. Die Verwendung einer Rakel zum Schieben von hochviskosem photopolymerisierbaren Material zum Wiederauffüllen des zuvor belichteten Bereichs hat sich als nicht effektiv erwiesen.

Es ist daher Aufgabe der vorliegenden Erfindung, ein Verfahren der Eingangs definierten Art so zu verbessern, dass photopolymerisierbares Material in effektiver Weise in Freiräume in der Materialverteilung in der Wanne im belichteten Bereich nachgeführt werden kann.

Zur Lösung dieser Aufgabe dienen die kennzeichnenden Merkmale des Patentanspruchs 1 in Verbindung mit dessen Oberbegriff. Vorteilhafte Ausführungsformen der Erfindung sind in den Unteransprüchen aufgeführt.

Nach dem erfindungsgemäßen Verfahren ist vorgesehen, dass zum Nachführen von photopolymerisierbarem Material in den belichteten Bereich ein längliches Mischelement im Wesentlichen quer zu seiner Längsrichtung über den Wannenboden relativ zu diesem unter dem Formkörperteil an der Bauplattform hindurch bewegt wird. Dabei hat das längliche Mischelement derartige Abmessungen und wird so positioniert bewegt, dass der obere Rand des Mischelements wenigstens entlang eines Teils seiner Länge unterhalb des Materialspiegels außerhalb des belichteten Bereichs in der Wanne bleibt. Das längliche Mischelement kann zum Beispiel ein dünner länglicher Stab oder ein Draht sein. Der obere Rand des länglichen Mischelements liegt unterhalb des Materialspiegels in der Wanne, d.h. beim Bewegen des länglichen Mischelements durch die Wanne kann photopolymerisierbares Material über den oberen Rand des länglichen Mischelements hinweg fließen. Das bedeutet, dass das längliche Mischelement nicht wie ein Schieber oder eine Rakel wirkt, die Material vor sich her schieben und eine Schicht definierter Dicke, die durch den Abstand des unteren Randes der Rakel zum Wannenboden bestimmt ist, zurücklassen. Im Zusammenhang mit der vorliegenden Erfindung hat sich herausgestellt, dass ein längliches Mischelement, das unter der Oberfläche des Materialspiegels durch die Wanne, nahe am Wannenboden oder sogar in Berührung damit, bewegt wird, sehr wirksam ist, um das hochviskose Material in den Bereich des Freiraums unter dem angehobenen Formkörperteil mitzuziehen. Bei diesem anfänglichen Mitziehen von Material und beim Fließen von photopolymerisierbarem Material über das längliche Mischelement wird das photopolymerisierbares Material in gewisser Weise auch angeregt oder gelockert, um in den Freiraum nachzufließen. Das bewegte längliche Mischelement fungiert hier insoweit auch als ein Element, um die nachfließende Bewegung von photopolymerisierbarem Material in den entstandenen Freiraum anzustoßen.

Die Bewegung des Mischelements muss nicht im strengen Sinne senkrecht zu seiner Längrichtung erfolgen. Es können der senkrechten Bewegung auch andere Bewegungen überlagert sein. Auch eine rotierende oder schwenkende Bewegung (vergleichbar einem Scheibenwischer) sind möglich, denn auch hier bewegt sich jedes Element des Mischelements außer dem Drehpunkt in jedem Moment senkrecht zu seiner Längsachse.

Das längliche Mischelement kann in einer vorteilhaften Ausführungsform so positioniert bewegt werden, dass der untere Rand des Mischelements bei seiner parallelen Bewegung zum Wannenboden in Berührung mit dem Wannenboden ist. Alternativ kann der untere Rand des länglichen Mischelements auch so positioniert bewegt werden, dass er bei seiner parallelen Bewegung zum Wannenboden einen vorgegebenen Abstand zu diesem hat. Die erstgenannte Verfahrensweise bewirkt, dass am Wannenboden eventuell anhaftende Materialaggregationen gelöst und in das fließende Material eingebracht werden. Dabei kann auch vorgesehen sein, dass das längliche Mischelement mit einer elastischen Dicht- oder Abziehlippe versehen ist, die bei der Bewegung des länglichen Mischelements über den Wannenboden an dem Wannenboden anliegend über diesen hinweggezogen wird.

In einer vorteilhaften Ausführungsform weist das längliche Mischelement einen Draht, insbesondere einen Metalldraht auf, der parallel zum Wannenboden über diesem und relativ beweglich dazu gehalten ist. Dabei kann der Draht zum Beispiel einen Durchmesser im Bereich von 0,1 mm bis 1 mm aufweisen.

Ferner ist es bevorzugt, dass das längliche Mischelement widerstandsbeheizbar ist und während der Bewegung über den Wannenboden widerstandsbeheizt wird, um die lokale Temperatur des umgebenden photopolymerisierbaren Materials zu erhöhen und dadurch dessen Viskosität zu verringern.

Die relative Bewegung des länglichen Mischelements zum Wannenboden wird entweder durch eine angetriebene Bewegung des länglichen Mischelements entlang einer horizontalen Ebene gegenüber einer feststehenden Wanne ausgeführt oder, bei einem ortsfest gehaltenen länglichen Mischelement, durch Bewegen der Wanne in einer horizontalen Ebene gegenüber dem länglichen Mischelement.

Grundsätzlich kann es ausreichend sein, wenn das längliche Mischelement einmal so über den Wannenboden bewegt wird, dass es den Bereich des angehobenen Formkörperteils einmal passiert. In einer vorteilhaften Ausführungsform kann das längliche Mischelement jedoch auch einmal wieder zurück zu seiner Ausgangsposition bewegt werden, so dass es den Bereich des Formkörperteils an der Bauplattform zweimal passiert. Auch mehrmaliges Hin- und Herbewegen kann vorteilhaft sein.

In einer bevorzugten Ausführungsform kann der Bewegung des länglichen Mischelements im Wesentlichen quer zu seiner Längsrichtung eine oszillierende Bewegung des länglichen Mischelements entlang seiner Längsrichtung überlagert sein, so dass das längliche Mischelement sozusagen eine Zickzackbewegung über dem Wannenboden ausführt. Dadurch kann auch photopolymerisierbares Material in den Prozess mit einbezogen werden, das in den im Wesentlichen quer zur Längsrichtung des Mischelements liegenden Seitenrändern um den Freiraum unter dem angehobenen Formkörperteil liegt. Bei einer ausschließlich senkrecht zur Längsrichtung des länglichen Mischelements erfolgenden Bewegung über den Wannenboden wird in erster Linie Material mit einbezogen, das in Bewegungsrichtung vor und hinter dem Freiraum liegt. Vorzugsweise ist dabei die Frequenz der oszillierenden Bewegung des länglichen Mischelements so groß, dass das längliche Mischelement mehrfach entlang seiner Längsrichtung hin- und herbewegt wird, während es den Bereich unter dem Formkörperteil der Bauplattform einmal passiert.

Das längliche Mischelement kann entlang seiner Länge eine gleichbleibende Querschnittsform haben, d.h. eine Stange oder einen Draht mit gleichen Querabmessungen bilden. Mit einer alternativen vorteilhaften Ausführungsform kann das längliche Mischelement entlang seiner Länge mit Profilierungen seiner Querschnittsform versehen sein, d.h. in regelmäßigen oder unregelmäßigen Abständen entlang seiner Länge mit Aufweitungen versehen sein.

Alternativ kann das längliche Mischelement eine entlang der Länge gleichmäßige Querschnittsform haben und so in Form eines länglichen Stabs vorgesehen sein, der eine runde, drei- oder mehreckige Querschnittsform hat oder als L-, U-, O-Profil ausgebildet ist.

In einer weiteren vorteilhaften Ausführungsform kann das längliche Mischelement mehrere parallele Drähte aufweisen, die hintereinanderliegend auf gleicher Höhe über dem Wannenboden oder in unterschiedlichen Höhen über dem Wannenboden gehalten über diesen bewegt werden.

Die Erfindung wird im Folgenden in Ausführungsbeispielen mit Bezug auf die Zeichnungen beschrieben, in denen:
Fig. 1 bis 4: Schematische seitliche Schnittansichten einer Vorrichtung zur Ausführung des Verfahrens in aufeinanderfolgenden Phasen des Verfahrensablaufs zeigen,
Fig. 5: Eine schematische Schnittansicht entlang der Linie A-A aus Fig. 4 zeigt,
Fig. 6 eine schematische Ansicht der Vorrichtung aus Fig. 1 bis 5 von oben zeigt,
Fig. 7 bis 11: Schematische Teilansichten der Vorrichtung aus den Fig. 1 bis 5 im Schnitt zeigen, die verschiedene Ausführungsformen für die Ausgestaltung des in der vorliegenden Erfindung eingesetzten Mischelements illustrieren, und
Fig. 12 eine schematische Draufsicht auf eine Vorrichtung zur Ausführung des Verfahrens von oben zeigt, die ein Beispiel für eine mögliche Bewegungsweise des Mischelements illustriert.

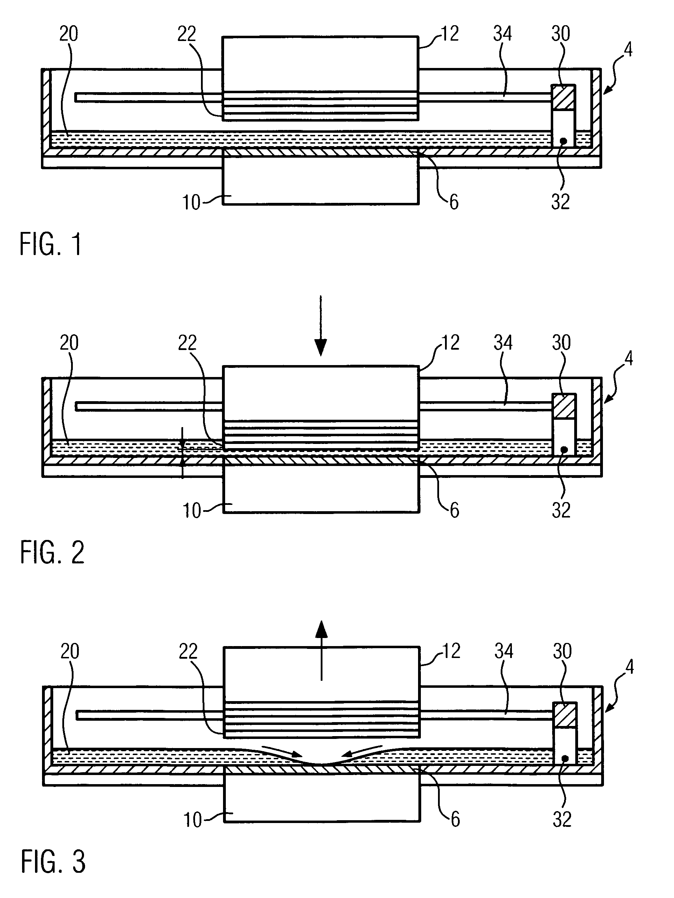

Die Funktionsweise einer Vorrichtung zur Ausführung eines Verfahrens der vorliegenden Erfindung wird zunächst unter Bezugnahme auf die Fig. 1 bis 3 beschrieben. Die Vorrichtung weist eine Wanne 4 auf, deren Wannenboden zumindest in einem Teilbereich 6 durchsichtig oder durchscheinend ist. Dieser Teilbereich 6 des Wannenbodens überdeckt zumindest die Ausdehnung einer Belichtungseinheit 10, die unter dem Wannenboden angeordnet ist. Die Belichtungseinheit 10 weist eine Lichtquelle und einen Lichtmodulator auf, mit dem die Intensität gesteuert von einer Steuereinheit ortsselektiv eingestellt wird, um ein Belichtungsfeld mit der für die momentan zu bildenden Schicht gewünschten Geometrie an dem Wannenboden 6 zu erzeugen. Alternativ kann in der Belichtungseinheit auch ein Laser verwendet werden, dessen Lichtstrahl über einen beweglichen Spiegel, der von einer Steuereinheit gesteuert wird, das Belichtungsfeld mit dem gewünschten Intensitätsmuster sukzessive abtastet.

Der Belichtungseinheit 10 gegenüber ist über der Wanne 4 eine Bauplattform 12 vorgesehen, die von einem nicht dargestellten Hubmechanismus getragen wird, so dass sie in höhenverstellbarer Weise über dem Wannenboden 6 im Bereich über der Belichtungseinheit 10 gehalten wird. Die Bauplattform 12 kann ebenfalls durchsichtig oder durchscheinend sein, so dass durch eine weitere Belichtungseinheit oberhalb der Bauplattform Licht eingestrahlt werden kann, um zumindest bei der Bildung der ersten Schicht an der Unterseite der Bauplattform 12 diese auch von oben zu belichten, damit die erst an der Bauplattform ausgehärtete Schicht auch mit hoher Verlässlichkeit an dieser anhaftet.

In der Wanne 4 befindet sich eine Füllung aus hochviskosem photopolymerisierbarem Material 20. Der Materialspiegel der Füllung liegt dabei deutlich höher als die Dicke der Schichten, die zur ortsselektiven Belichtung definiert werden sollen. Zur Definition einer Schicht aus photopolymerisierbarem Material wird in folgender Weise vorgegangen. Die Bauplattform 12 wird durch den Hubmechanismus in gesteuerter Weise abgesenkt, so dass (vor dem ersten Belichtungsschritt) ihre Unterseite in die Füllung des photopolymerisierbaren Materials 20 eintaucht und sich dem Wannenboden 6 soweit nähert, dass zwischen der Unterseite der Bauplattform 12 und dem Wannenboden 6 genau die gewünschte Schichtdicke Δ (siehe Fig. 2) verbleibt. Während dieses Eintauchvorgangs wird photopolymerisierbares Material aus dem Zwischenraum zwischen der Unterseite der Bauplattform 12 und dem Wannenboden 6 verdrängt. Nach Einstellung der Schichtdicke Δ erfolgt die für diese Schicht gewünschte ortsselektive Belichtung der Schicht, um sie in der gewünschten Form auszuhärten. Insbesondere bei der Bildung der ersten Schicht kann auch eine Belichtung von oben durch die durchsichtige oder durchscheinende Bauplattform 12 erfolgen, damit insbesondere im Kontaktbereich zwischen der Unterseite der Bauplattform 12 und dem photopolymerisierbaren Material eine sichere und vollständige Aushärtung erfolgt und damit eine gute Anhaftung der ersten Schicht an der Bauplattform 12 gewährleistet ist. Nach der Bildung der Schicht wird die Bauplattform mittels des Hubmechanismus wieder angehoben.

Diese Schritte werden nachfolgend mehrfach wiederholt, wobei dann jeweils der Abstand der Unterseite der zuletzt gebildeten Schicht 22 zum Wannenboden 6 auf die gewünschte Schichtdicke Δ eingestellt wird und daraufhin die nächste Schicht in der gewünschten Weise ortsselektiv ausgehärtet wird.

Nach Anheben der Bauplattform 12 nach einem Belichtungsschritt liegt im belichteten Bereich ein Materialdefizit vor, wie in Fig. 3 angedeutet. Dies ist dadurch bedingt, dass nach Aushärtung der eingestellten Schicht mit der Dicke Δ das Material aus diese Schicht ausgehärtet und mit der Bauplattform und dem daran bereits gebildeten Teil des Formkörpers angehoben wird. Das damit fehlende photopolymerisierbare Material zwischen der Unterseite des bereits gebildeten Formkörperteils und dem Wannenboden 6 muss aus der Füllung des photopolymerisierbaren Materials 20 aus dem Umgebungsbereich des belichteten Bereichs aufgefüllt werden. Aufgrund der hohen Viskosität des Materials fließt dieses jedoch nicht von selbst wieder in den belichteten Bereich zwischen der Unterseite des Formkörperteils und dem Wannenboden zurück, so dass hier Materialsenken oder "Löcher" zurückbleiben können.

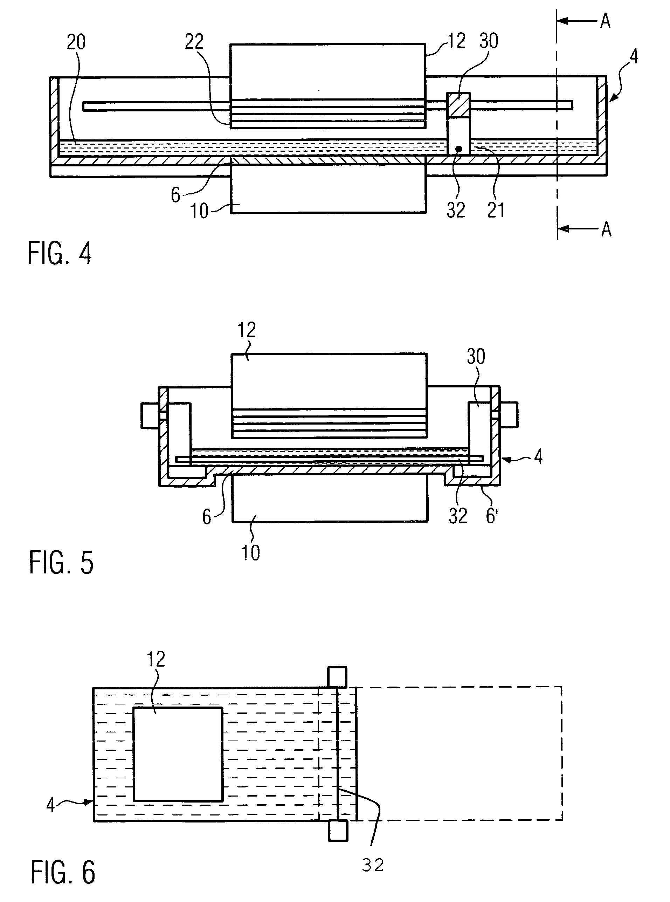

Zum Nachführen von photopolymerisierbarem Material in den Belichtungsbereich ist erfindungsgemäß vorgesehen, dass ein längliches Mischelement 32 durch die Füllung aus photopolymerisierbarem Material 20 in der Wanne belegt wird. In dem in den Fig. 1 bis 5 dargestellten Ausführungsbeispiel weist das Mischelement 32 einen länglichen Draht auf, der zwischen zwei an den Seitenwänden der Wanne 4 beweglich gelagerten Tragarmen 30 gespannt ist. Die Tragarme 30 können in Führungsschlitzen 34 in den Seitenwänden der Wanne 4 beweglich gelagert sein, so dass durch Bewegung der Tragarme 30 in den Führungsschlitzen 34 der zwischen den Tragarmen 30 gespannte Draht 32 parallel zum Wannenboden 6 relativ zu der Wanne 4 bewegt werden kann. Das längliche Mischelement 32 weist dabei solche Abmessungen auf und seine Bewegung wird relativ zum Wannenboden in solcher Weise geführt, dass der obere Rand des länglichen Mischelements 32 unterhalb des Materialspiegels der Füllung aus photopolymerisierbarem Material 20 in der Wanne außerhalb des belichteten Bereichs bleibt. Wie in der Schnittansicht aus Fig. 5 zu erkennen, ist das Mischelement 32 in diesem Fall auf ganzer Länge des Drahtes unterhalb des Materialspiegels in der Wanne, und es ragen nur die Tragarme 30 über den Materialspiegel in der Wanne hinaus. Die Anordnung des länglichen Mischelements unterhalb des Materialspiegels in der Wanne 4 hat zur Folge, dass das längliche Mischelement 32 bei seiner Bewegung relativ zu der Wanne durch den belichteten Bereich hindurch nicht im wesentlichen Umfang Material vor sich her schiebt, sondern dieses über das Mischelement 32 hinweg fließt, wobei es dazu eine leichte Aufwärtsbewegung durchführt, wie durch den Pfeil 21 in Fig. 4 angedeutet ist. Es hat sich gezeigt, dass durch diese Art der Einwirkung auf das photopolymerisierbare Material in der Wanne dieses in effektiver Weise dazu angeregt wird, in den materialverarmten belichteten Bereich zwischen Bauplattform 12 und Belichtungseinheit 10 nachzufließen.

Die Bewegung des länglichen Mischelements 32 relativ zu der Wanne kann entweder, bei einer feststehenden Wanne 4 durch einen Linearantrieb bewirkt werden, der die Tragarme 30 entlang der Führungsschlitze 34 verfährt, um die gewünschte Bewegung des länglichen Mischelements 32 durch den belichteten Bereich zwischen Bauplattform 12 und Belichtungseinheit 10 hindurch zu bewirken. Alternativ kann auch das längliche Mischelement 32 feststehend im Raum gehalten sein, während die Wanne 4 horizontal beweglich gelagert und durch einen Antrieb hin und her geschoben wird, wie dies in Fig. 6 angedeutet ist, in der die Wanne 4 in einer Endstellung der Bewegung mit durchgezogenen Linien gezeigt ist, während die gegenüberliegende Stellung der Wanne mit gestrichelten Linien angedeutet ist.

Wie in Fig. 5 gezeigt, weist der Wannenboden 6 an beiden Seiten Vertiefungen 6' auf. In diese Vertiefungen 6' ragen die Tragarme 30 mit ihren unteren Enden hinein. Dies ermöglicht es, das längliche Mischelement 32 auf Höhe des Wannenbodens 6 zu halten, ohne dass die unteren Enden der Tragarme 30 in ihrer Bewegung durch den Wannenboden 6 gestört werden.

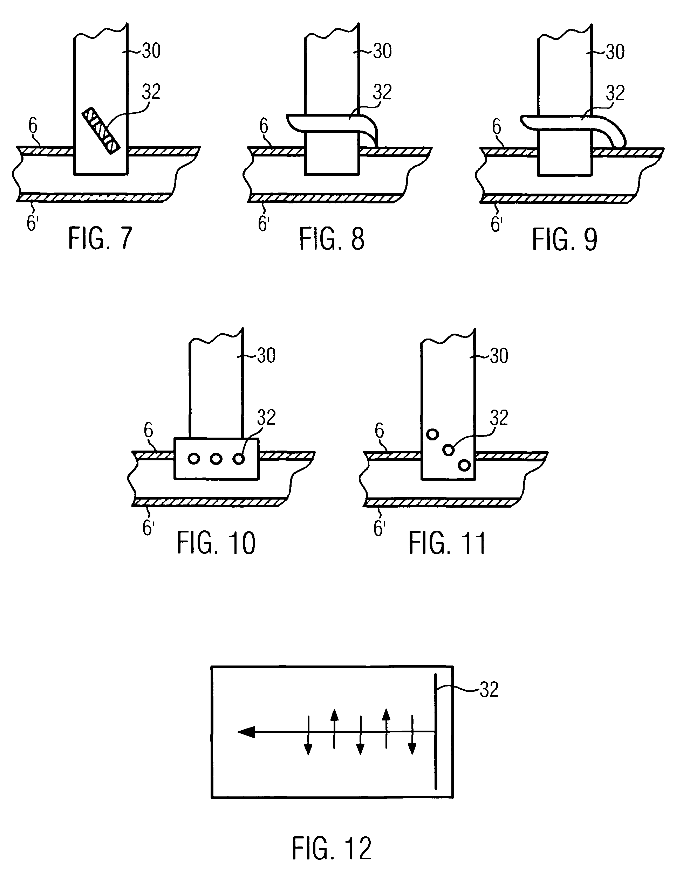

In den Fig. 7 bis 11 sind weitere Ausführungsformen des länglichen Mischelements 32 in Detailansichten im Schnitt gezeigt. In Fig. 7 ist der untere Endbereich eines Tragarms 30 gezeigt. Ferner sind der Wannenboden 6 und der Boden im Bereich der Vertiefungen 6' angedeutet. In dem Ausführungsbeispiel aus Fig. 7 weist das längliche Mischelement 32 eine flache längliche Platte auf, die schräg steht und in ihrer Oberfläche eine Mehrzahl von Öffnungen hat, durch die photopolymerisierbares Material hindurchfließen kann. Dabei ist die längliche Platte im Übrigen so angeordnet, dass ihr oberer Rand unterhalb des Materialspiegels in der Wanne verbleibt.

Das in Fig. 8 dargestellte Mischelement 32 weist eine eher horizontal angeordnete längliche Platte 32 auf, die an einem Ende eine Wisch- oder Abziehlippe 33 aus elastischem Material trägt. In diesem Ausführungsbeispiel ist vorgesehen, dass das längliche Mischelement 32 mit der elastischen Abziehlippe 33 in Anlage an dem Wannenboden über diesen bewegt wird um etwaige Anhaftungen an dem Wannenboden mitzuziehen.

In dem Ausführungsbeispiel in Fig. 9 weist das längliche Mischelement 32 eine Art Flügelprofil auf. Durch diese kurvenförmige Kontur des länglichen Mischelements 32 wird eine verstärkte vertikale Bewegung des photopolymerisierbaren Materials bei dessen Durchquerung induziert, was ein besseres Mit- und Nachfließen des Materials in den aufzufüllenden Bereich bewirkt.

In dem Ausführungsbeispiel in Fig. 10 weist das längliche Mischelement 32 drei horizontal hintereinander liegende Metalldrähte auf, während in dem Ausführungsbeispiel nach Fig. 11 drei hintereinander liegende Metalldrähte in unterschiedlicher Höhe über den Wannenboden bewegt werden. Die Ausbildung des länglichen Mischelements mit mehreren hintereinander liegenden Drähten führt zu einer verstärkten Materialbewegung, während die Mehrzahl von Drähten durch das Material bewegt wird.

In Fig. 12 ist eine schematische Darstellung zu einer möglichen Bewegungsweise des länglichen Mischelements 32 gezeigt. Das längliche Mischelement wird zum einen quer zu seiner Längsrichtung durch die Wanne bewegt, was durch den langen horizontalen Pfeil angedeutet ist. Dieser Bewegung quer zur Längsrichtung ist eine oszillierende Bewegung in Längsrichtung des länglichen Mischelements 32 überlagert. Diese Überlagerung einer zusätzlichen Bewegungskomponente führt zu einer besseren Einbeziehung bei der Nachführung von Material aus allen Bereichen der Materialfüllung der Wanne. Die Frequenz der oszillierenden Bewegung in Längsrichtung des länglichen Mischelements 32 sollte dabei so hoch sein, dass mehrere Hin- und Herbewegungen in Längsrichtung während einer Bewegung des länglichen Mischelements quer zu dessen Längsrichtung durch die Wanne stattfinden. Grundsätzlich ist es auch denkbar, der Bewegung quer zur Längsrichtung des länglichen Mischelements 32 eine weitere schnell oszillierende Bewegung des länglichen Mischelements 32 quer zu dessen Längsrichtung zu überlagern, so dass neben der Bewegung quer durch die Wanne eine schnelle hin- und hergehende Bewegung vor und zurück ausgeführt wird, um dadurch die Materialmitnahme zu verbessern.

Das längliche Mischelement 32 sollte wenigstens einmal durch den belichteten Bereich hindurch durch die Wanne hindurchbewegt werden. Es kann aber auch vorgesehen sein, dass das längliche Mischelement 32 auch wieder zurück durch den belichteten Bereich bewegt wird oder dass eine mehrfache Hin- und Herbewegung ausgeführt wird.

In bevorzugten Ausführungsformen kann auch vorgesehen sein, dass das längliche Mischelement als Widerstandsheizelement ausgebildet ist. Durch Beheizung des länglichen Mischelements wird eine lokale Aufheizung des photopolymerisierbaren Materials im Bereich des länglichen Mischelements bewirkt, wodurch die Viskosität des Materials um das längliche Mischelement herum reduziert wird und dadurch ein Nachziehen und Nachfließen des Materials in den aufzufüllenden Bereich erleichtert wird.

## Patentansprüche

1. Verfahren zum schichtweisen Aufbau eines Formkörpers aus hochviskosem photopolymerisierbarem Material (20), bei dem eine Bauplattform (12), an deren Unterseite die erste Schicht des aufzubauenden Formkörpers ausgehärtet wird, in eine Wanne (4) in das photopolymerisierbare Material auf eine so bestimmte Höhe abgesenkt wird, dass zwischen der Unterseite der Bauplattform oder, wenn bereits vorhanden, der untersten ausgehärteten Schicht (22) des daran gebildeten Formkörperteils und dem Wannenboden (6) eine Schicht aus photopolymerisierbarem Material mit vorgegebener Schichtdicke definiert wird, die Schicht durch selektive Belichtung von unten durch einen durchsichtigen Wannenboden in der gewünschten Form belichtet und ausgehärtet wird, die Bauplattform wieder angehoben, photopolymerisierbares Material in den belichteten Bereich unter der angehobenen Bauplattform nachgeführt wird und die vorhergehenden Schritte wiederholt werden, bis die letzte Schicht des Formkörpers gebildet ist, **dadurch gekennzeichnet, dass** zum Nachführen von photopolymerisierbarem Material in den belichteten Bereich unter der Bauplattform ein längliches Mischelement (32) im Wesentlichen quer zu seiner Längsrichtung über den Wannenboden relativ zu diesem unter der Bauplattform hindurch durch den belichteten Bereich bewegt wird und dass das Mischelement (32) derartige Abmessungen hat und so positioniert bewegt wird, dass der obere Rand des Mischelements wenigstens entlang eines Teils seiner Länge unterhalb des Materialspiegels des photopolymerisierbaren Materials bleibt, der außerhalb des belichteten Bereichs in der Wanne gegeben ist.

2. Verfahren zum schichtweisen Aufbau eines Formkörpers nach Anspruch 1, **dadurch gekennzeichnet, dass** das längliche Mischelement (32) so positioniert bewegt wird, dass der untere Rand des Mischelements bei seiner parallelen Bewegung zum Wannenboden (6) in Berührung mit dem Wannenboden ist.

3. Verfahren zum schichtweisen Aufbau eines Formkörpers nach Anspruch 1, **dadurch gekennzeichnet, dass** das längliche Mischelement (32) so positioniert bewegt wird, dass der untere Rand des Mischelements bei seiner parallelen Bewegung zum Wannenboden (6) einen vorgegebenen Abstand zu diesem hat.

4. Verfahren zum schichtweisen Aufbau eines Formkörpers nach einem der vorhergehenden Ansprüche, **dadurch gekennzeichnet, dass** das längliche Mischelement (32) einen Draht, insbesondere einen Metalldraht, aufweist, der parallel zum Wannenboden (6) über diesem und relativ beweglich dazu gehalten ist.

5. Verfahren zum schichtweisen Aufbau eines Formkörpers nach Anspruch 4, **dadurch gekennzeichnet, dass** der Draht einen Durchmesser im Bereich von 0,1 mm bis 1 mm aufweist.

6. Verfahren zum schichtweisen Aufbau eines Formkörpers nach einem der vorhergehenden Ansprüche, **dadurch gekennzeichnet, dass** das längliche Mischelement (32) widerstandsbeheizbar ist und während der Bewegung unter dem Formkörperteil widerstandsbeheizt wird, um die lokale Temperatur des umgebenden Photopolymerisierbares Materials (20) zu erhöhen und dadurch dessen Viskosität zu verringern.

7. Verfahren zum schichtweisen Aufbau eines Formkörpers einem der vorhergehenden Ansprüche, **dadurch gekennzeichnet, dass** zum Nachführen von Photopolymerisierbares Material (20) das längliche Mischelement (32) gegenüber einer feststehenden Wanne (4) durch den Bereich der Bauplattform über den Wannenboden (6) bewegt wird.

8. Verfahren zum schichtweisen Aufbau eines Formkörpers nach einem der Ansprüche 1 bis 6, **dadurch gekennzeichnet, dass** zum Nachführen von Photopolymerisierbares (20) die Wanne (4) gegenüber einem feststehenden länglichen Mischelement (32) bewegt wird, so dass längliche Mischelement durch den Bereich der Baulattform (12) über den wannenboden (6) bewegt wird.

9. Verfahren zum schichtweisen Aufbau eines Formkörpers nach einem der vorhergehenden Ansprüche, **dadurch gekennzeichnet, dass** das längliche Mischelement (32) zum Nachführen von Photopolymerisierbares Material (20) wenigstens zweimal unter dem Formkörperteil an der Bauplattform (12) hindurch bewegt wird.

10. Verfahren zum schichtweisen Aufbau eines Formkörpers nach einem der vorhergehenden Ansprüche, **dadurch gekennzeichnet, dass** der Bewegung des länglichen Mischelements (32) im Wesentlichen quer zu seiner Längsrichtung eine oszillierende Bewegung des länglichen Mischelements entlang seiner Längsrichtung überlagert wird.

11. Verfahren nach Anspruch 10, **dadurch gekennzeichnet, dass** die Frequenz der oszillierenden Bewegung des länglichen Mischelementst (32) so groß ist, dass das längliche Mischelement (32) mehrfach entlang seiner Längsrichtung hin und her bewegt wird, während es den Bereich unter dem Formkörperteil der Bauplattfor (12) einmal passiert.

12. Verfahren zum schichtweisen Aufbau eines Formkörpers nach einem der vorhergehenden Ansprüche, **dadurch gekennzeichnet, dass** das längliche Mischelement (32) entlang seiner Länge abwechselnd Bereiche mit vergrößertem Querschnitt und verkleinertem Querschnitt aufweist.

13. Verfahren zum schichtweisen Aufbau eines Formkörpers nach einem der Ansprüche 1 bis 11, **dadurch gekennzeichnet, dass** das längliche Mischelement (32) in Form eines länglichen Stabs vorgesehen ist, der eine runde, drei- oder mehreckige Querschnittsform hat oder der als L-, U-, O-Profil ausgebildet ist.

14. Verfahren zum schichtweisen Aufbau eines Formkörpers nach Anspruch 4, **dadurch gekennzeichnet, dass** das längliche Mischelement (32) mehrere parallele Drähte aufweist, die hintereinander liegend auf gleicher Höhe über dem Wannenboden (6) oder in unterschiedlichen Höhen über dem Wannenboden gehalten über diesen bewegt werden.

15. Verfahren zum schichtweisen Aufbau eines Formkörpers nach einem der Ansprüche 2 bis 13, **dadurch gekennzeichnet, dass** das längliche Mischelement (32) auf ganzer Länge eine elastische Dichtlippe aufweist, die bei der Bewegung des länglichen Mischelements über den Wannenboden (6) in Berührung mit dem Wannenboden bewegt wird.

## Claims

1. A method for the layered construction of a shaped body made of highly viscous photopolymerizable material (20), in which a production platform (12), on the lower side of which the first layer of the shaped body to be constructed is cured, is lowered into a tank (4) into the photopolymerizable material to a height determined so that a layer of photopolymerizable material with a predetermined layer thickness is defined between the lower side of the production platform or, if already present, the lowest cured layer (22) of the shaped body part formed thereon and the tank bottom (6), the layer is exposed and cured in the desired shape by selective exposure from below through a transparent tank bottom, the production platform is raised again, the exposed region below the raised platform is replenished with photopolymerizable material and the preceding steps are repeated until the last layer of the shaped body is formed, **characterized in that** in order to replenish the exposed region below the production platform with photopolymerizable material, an elongate mixing element (32) is moved essentially transversely to its longitudinal direction over the tank bottom, relative thereto, below the production platform through the exposed region, and **in that** the mixing element (32) has dimensions, and is moved in a positioned fashion, in such a way that the upper edge of the mixing element remains below the material level of the photopolymerizable material, which exists outside the exposed region in the tank, at least along a part of its length.

2. Method for the layered construction of a shaped body according to Claim 1, **characterized in that** the elongate mixing element (32) is moved in a positioned fashion in such a way that the lower edge of the mixing element is in contact with the tank bottom during its movement parallel to the tank bottom (6).

3. Method for the layered construction of a shaped body according to Claim 1, **characterized in that** the elongate mixing element (32) is moved in a positioned fashion in such a way that the lower edge of the mixing element is at a predetermined distance from the tank bottom (6) during its movement parallel thereto.

4. Method for the layered construction of a shaped body according to one of the preceding claims, **characterized in that** the elongate mixing element (32) comprises a wire, in particular a metal wire, which is held parallel to the tank bottom (6), over it and movably relative thereto.

5. Method for the layered construction of a shaped body according to Claim 4, **characterized in that** the wire has a diameter in the range of from 0.1 mm to 1 mm.

6. Method for the layered construction of a shaped body according to one of the preceding claims, **characterized in that** the elongate mixing element (32) is resistively heatable and is resistively heated during the movement below the shaped body part in order to increase the local temperature of the surrounding photopolymerizable material (20) and thereby reduce its viscosity.

7. Method for the layered construction of a shaped body according to one of the preceding claims, **characterized in that** in order to replenish the photopolymerizable material (20), the elongate mixing element (32) is moved with respect to a stationary tank (4) through the region of the production platform over the tank bottom (6).

8. Method for the layered construction of a shaped body according to one of Claims 1 to 6, **characterized in that** in order to replenish the photopolymerizable material (20), the tank (4) is moved with respect to a stationary elongate mixing element (32), in such a way that the elongate mixing element is moved through the region of the production platform (12) over the tank bottom (6).

9. Method for the layered construction of a shaped body according to one of the preceding claims, **characterized in that** the elongate mixing element (32) is moved through below the shaped body part on the production platform (12) at least twice in order to replenish the photopolymerizable material (20).

10. Method for the layered construction of a shaped body according to one of the preceding claims, **characterized in that** an oscillating movement of the elongate mixing element along its longitudinal direction is superimposed on the movement of the elongate mixing element (32) essentially transversely to its longitudinal direction.

11. Method according to Claim 10, **characterized in that** the frequency of the oscillating movement of the elongate mixing element (32) is so high that the elongate mixing element (32) is moved several times to and fro along its longitudinal direction while it passes once through the region below the shaped body part of the production platform (12).

12. Method for the layered construction of a shaped body according to one of the preceding claims, **characterized in that** the elongate mixing element (32) comprises regions with an enlarged cross section and a reduced cross section alternating along its length.

13. Method for the layered construction of a shaped body according to one of Claims 1 to 11, **characterized in that** the elongate mixing element (32) is provided in the form of an elongate rod which has a round, triangular or polygonal cross-sectional shape or which is formed as an L-, U-, or O-shaped profile.

14. Method for the layered construction of a shaped body according to Claim 4, **characterized in that** the elongate mixing element (32) comprises a plurality of parallel wires, which are moved over the tank bottom while being held lying one behind the other at the same height above the tank bottom (16) or at different heights above the tank bottom.

15. Method for the layered construction of a shaped body according to one of Claims 2 to 13, **characterized in that** the elongate mixing element (32) has a resilient sealing lip over its entire length, which is moved over the tank bottom (6) in contact with the tank bottom during the movement of the elongate mixing element.

## Revendications

1. Procédé de réalisation par couches d'un corps façonné, à partir d'un matériau photopolymérisable (20) hautement visqueux, selon lequel une plateforme de construction (12), sur la face inférieure de laquelle est durcie la première couche du corps façonné à réaliser, est abaissée dans un bac (4), dans le matériau photopolymérisable, jusqu'à une hauteur déterminée de manière telle qu'une couche de matériau photopolymérisable avec une épaisseur de couche prédéterminée soit définie entre la face inférieure de la plateforme de construction ou, lorsqu'elle existe déjà, de la dernière couche (22) durcie de la partie de corps façonné, réalisée sur la plateforme, et le fond de bac (6), la couche est exposée sous la forme souhaitée, par exposition sélective d'en bas, à travers un fond de bac transparent, et est durcie, la plateforme de construction est relevée, du matériau photopolymérisable est rechargé dans la zone exposée, sous la plateforme de construction relevée, et les étapes précédentes sont répétées jusqu'à ce que la dernière couche du corps façonné soit formée; **caractérisé en ce que** pour recharger du matériau photopolymérisable dans la zone exposée, sous la plateforme de construction, un élément mélangeur (32) allongé est déplacé de façon sensiblement perpendiculaire à son sens longitudinal, au-dessus du fond de bac, par rapport à celui-ci, en passant sous la plateforme de construction et en traversant la zone exposée, et **en ce que** l'élément mélangeur (32) présente des dimensions telles et est déplacé avec un positionnement tel que le bord supérieur de l'élément mélangeur reste sous la surface du matériau photopolymérisable, au moins sur une partie de sa longueur, surface qui se situe à l'extérieur de la zone exposée dans le bac.

2. Procédé de réalisation par couches d'un corps façonné selon la revendication 1, **caractérisé en ce que** l'élément mélangeur (32) allongé est déplacé dans une position telle que le bord inférieur de l'élément mélangeur, lors de son déplacement parallèlement au fond de bac (6), soit en contact avec le fond de bac.

3. Procédé de réalisation par couches d'un corps façonné selon la revendication 1, **caractérisé en ce que** l'élément mélangeur (32) allongé est déplacé dans une position telle que le bord inférieur de l'élément mélangeur, lors de son déplacement parallèlement au fond de bac (6), présente une distance prédéterminée par rapport à celui-ci..

4. Procédé de réalisation par couches d'un corps façonné selon l'une des revendications précédentes, **caractérisé en ce que** l'élément mélangeur (32) allongé présente un fil, en particulier un fil métallique, qui est tenu parallèlement au fond de bac (6), au-dessus de celui-ci et avec possibilité de déplacement par rapport à celui-ci..

5. Procédé de réalisation par couches d'un corps façonné selon la revendication 4, **caractérisé en ce que** le fil présente un diamètre situé dans la plage allant de 0,1 mm à 1 mm.

6. Procédé de réalisation par couches d'un corps façonné selon l'une des revendications précédentes, **caractérisé en ce que** l'élément mélangeur (32) allongé peut être chauffé par résistance et est chauffé par résistance au cours du déplacement sous la partie de corps façonné, afin d'augmenter la température locale du matériau photopolymérisable (20) qui l'entoure et réduire ainsi la viscosité de celui-ci.

7. Procédé de réalisation par couches d'un corps façonné selon l'une des revendications précédentes, **caractérisé en ce que** pour recharger du matériau photopolymérisable (20), l'élément mélangeur (32) allongé est déplacé par rapport à un bac (4) fixe, au-dessus du fond de bac (6), en traversant la zone de la plateforme de construction.

8. Procédé de réalisation par couches d'un corps façonné selon l'une des revendications 1 à 6, **caractérisé en ce que** pour recharger du matériau photopolymérisable (20), le bac (4) est déplacé par rapport à un élément mélangeur (32) allongé fixe, de sorte que l'élément mélangeur (32) allongé est déplacé au-dessus du fond de bac (6), en traversant la zone de la plateforme de construction.

9. Procédé de réalisation par couches d'un corps façonné selon l'une des revendications précédentes, **caractérisé en ce que** pour recharger du matériau photopolymérisable (20), l'élément mélangeur (32) allongé est déplacé au moins deux fois sous la partie de corps façonné sur la plateforme de construction.

10. Procédé de réalisation par couches d'un corps façonné selon l'une des revendications précédentes, **caractérisé en ce que** l'on superpose au mouvement de l'élément mélangeur (32) allongé, sensiblement perpendiculairement à sa longueur, un mouvement oscillant de l'élément mélangeur allongé, dans le sens de sa longueur.

11. Procédé selon la revendication 10, **caractérisé en ce que** la fréquence du mouvement oscillant de l'élément mélangeur (32) allongé est si grande que l'élément mélangeur (32) allongé est déplacé plusieurs fois en un mouvement de va-et-vient dans le sens de sa longueur, pendant qu'il passe une fois dans la zone sous la partie de corps façonné de la plateforme de construction (12).

12. Procédé de réalisation par couches d'un corps façonné selon l'une des revendications précédentes, **caractérisé en ce que** l'élément mélangeur (32) allongé présente sur sa longueur en alternance des portions de section agrandie et de section réduite.

13. Procédé de réalisation par couches d'un corps façonné selon l'une des revendications 1 à 11, **caractérisé en ce que** l'élément mélangeur (32) allongé est prévu sous la forme d'une barre allongée qui présente un profil transversal rond, triangulaire ou polygonal ou qui est réalisée comme profilé en L, en U ou en O.

14. Procédé de réalisation par couches d'un corps façonné selon la revendication 4, **caractérisé en ce que** l'élément mélangeur (32) allongé présente plusieurs fils parallèles qui sont déplacés au-dessus du fond de bac (6), en étant tenus à la même hauteur au-dessus de celui-ci, en étant placés les uns derrière les autres, ou en étant tenus à des hauteurs différentes au-dessus du fond de bac.

15. Procédé de réalisation par couches d'un corps façonné selon l'une des revendications 2 à 13, **caractérisé en ce que** l'élément mélangeur (32) allongé présente sur toute sa longueur une lèvre d'étanchéité élastique qui, lors du déplacement de l'élément mélangeur allongé au-dessus du fond de bac (6), est déplacée en étant en contact avec le fond de bac.
